# EUROPÄISCHE PATENTSCHRIFT

(11) **EP 2 616 286 B1**
(45) Veröffentlichungstag und Bekanntmachung des Hinweises auf die Patenterteilung: **05.11.2014**
(21) Anmeldenummer: 11740630.6
(22) Anmeldetag: 29.07.2011
(51) Int. Cl.: B60R 25/20, B60R 25/24

(54) **ERFASSUNGSVERFAHREN FÜR BETÄTIGUNGSGESTEN UND ZUGEHÖRIGES KALIBRIERUNGSVERFAHREN**
DETECTION METHOD FOR ACTUATION GESTURES, AND ASSOCIATED CALIBRATION METHOD
DISPOSITIF DE DÉTECTION DE GESTES D'ACTIONNEMENT ET PROCÉDÉ DE CALIBRAGE ASSOCIÉ

(30) Priorität: 16.09.2010 DE 102010037577
(43) Veröffentlichungstag der Anmeldung: 24.07.2013
(73) Patentinhaber: Huf Electronics GmbH, 42551 Velbert (DE)
(72) Erfinder: MÜLLER, Ulrich, 42549 Velbert (DE); ETTE, Bernd, 38442 Wolfsburg (DE)
(74) Vertreter: Zenz
(86) Internationale Anmeldenummer: PCT/EP2011/063114
(87) Internationale Veröffentlichungsnummer: WO 2012/034768

(56) Entgegenhaltungen:
- EP-A1- 1 733 937
- DE-A1- 10 106 400
- DE-A1-102006 037 237
- DE-B3-102004 041 709
- DE-B3-102005 032 402

## Beschreibung

Die Erfindung betrifft ein Erfassungsverfahren zur Erfassung von Betätigungsgesten an einem Kraftfahrzeug. Insbesondere betrifft die Erfindung ein Verfahren, um von einem Benutzer zum Zugriff auf eine Fahrzeugfunktion ausgeübte Betätigungsgesten zu detektieren und die Erfassung individuell auf einen Benutzer zu kalibrieren.

Die DE 10 2004 041 709 B offenbart eine Vorrichtung und Verfahren zur Betätigungsabfrage für eine Funktion, das öffnen einer Heckklappe, an einem Kraftfahrzeug mit einer Sensoranordnung, wobei mehrere Sensoren verwendet werden, die innerhalb eines definierten Zeitfensters und in einer bestimmten Reihenfolge geschaltet oder betätigt werden müssen.

Einrichtungen zur berührungslosen Betätigung von Kraftfahrzeugfunktionen sind aus dem Stand der Technik bekannt. Beispielsweise beschreibt die DE 102008063366 eine berührungslos betätigbare Heckklappe. Diese Einrichtung erlaubt es einem Benutzer, eine Betätigungsgeste im Fußbereich unter dem Heckstoßfänger auszuführen, um die Heckklappe zu öffnen. Dafür sind bei dieser Einrichtung Kapazitätssensoren vorgesehen, die mit ihrem Erfassungsbereich zur erfassung unterschiedlicher Raumbereiche ausgerichtet sind, und anhand deren Signale eine Betätigungsgeste erfasst wird.

Eine solche berührungslose Betätigung einer Heckklappe ist für den Komfort und die Sicherheit sinnvoll, wenn einer Person aus irgendwelchen Gründen die händische Betätigung einer Heckklappe nur erschwert möglich ist.

Die Erfassung einer Bewegung kann eine Körperbewegung, zum Beispiel das Ausführen einer angetäuschten Kick-Bewegung, das Anheben und Schwenken des Beines oder ähnliches erfassen. Es ist jedoch zu vermeiden, dass auch Betätigungen dann erkannt und eine Funktion ausgelöst wird, wenn gar nicht gezielt eine entsprechende Betätigungsgeste ausgeführt wurde. Dies kann beispielsweise durch in den Erfassungsbereich gelangende Objekte (Bälle, Haustiere oder ähnliches) geschehen.

Aus der DE 102004041709 ist eine Einrichtung zur berührungslosen Betätigung einer Heckklappe bekannt, wobei vorgeschlagen wird, zwei Sensoranordnungen mit getrennten Detektionsbereichen zu verwenden. Hierzu kann beispielsweise ein Ultraschall-Abstandserfassungssystem als eine der Sensoreinrichtungen ein verwendet werden, welches ohnehin am Kraftfahrzeug für Abstandsmessungen vorgesehen ist.

Die vorhandenen Erfassungssysteme sind jedoch bezüglich des Benutzers oft zu unspezifisch und weisen nicht die gewünschte Erfassungsgenauigkeit auf.

Aufgabe der Erfindung ist es, ein Auswerteverfahren für berührungslos betätigte Sensoranordnungen zur Verfügung zu stellen, welches die Erkennungsgenauigkeit erhöht.

Gelöst wird diese Aufgabe durch ein Verfahren mit den Merkmalen des Patentanspruchs 1 sowie ein Verfahren zum Kalibrieren einer Sensoranordnung mit den Merkmalen des Patentanspruchs 8.

Erfindungsgemäß werden bei dem Verfahren die Signale von wenigstens zwei Sensoranordnungen überwacht. Diese können beispielsweise kapazitive Sensoranordnungen, wie in der vorstehend genannten Druckschrift sein. Eine erste der Sensoranordnungen wird überwacht, bis von dieser eine charakteristische Signalantwort s1 empfangen wird bzw. bis diese detektiert wird. Diese erste charakteristische Signalantwort ist eine Bedingung für das übrige Verfahren und kann auch als Trigger für das gesamte Verfahren dienen.

Nachfolgend wird die zweite Sensoranordnung überwacht, bis dort ein zweites charakteristisches Signal s2 detektiert wird. Als charakteristisches Signal ist in diesem Zusammenhang jedes Signal zu verstehen, welches mit hoher Verlässlichkeit die Lageänderung eines Körpers im Erfassungsbereich des Sensors anzeigt. Insbesondere kann ein signifikanter Anstieg oder Abfall eines Signals zu erfassen sein. Im Falle einer kapazitiven Erfassung wäre dies der Anstieg oder Abfall des Kapazitätswertes bzw. eines Ladungszustandes. Die entsprechenden Erfassungsverfahren und Signalantworten sind aus der Technik, z.B. den oben genannten Dokumenten bekannt.

Die Zeitpunkte der Erfassung sowohl des ersten Signals s1 in der ersten Sensoranordnung t1 als auch des zweiten Signals s2 in der zweiten Sensoranordnung t2 werden erfasst und gespeichert. Schließlich werden weitere Signalantworten abgefragt. Zunächst wird die zweite Sensoranordnung erneut überwacht, bis sich dort wiederum eine charakteristische Signalantwort s3 abgreifen lässt. Eine zugehörige Zeit t3 wird gespeichert.

Schließlich wird die erste Sensoranordnung überwacht, bis dort eine charakteristische Signalantwort s4 abgefragt wird, auch dieser Zeitpunkt wird als Zeitwert t4 gespeichert.

Die Ansteuerung und Erfassung der einzelnen Signalantworten erfolgt je nach verwendetem Sensor in einer sensorspezifischen Weise, wie sie aus dem Stand der Technik bekannt ist. Wesentlich ist die weitere Interpretation und Verarbeitung der Signale.

Dieses Verfahren nutzt erfindungsgemäß aus, dass wenigstens zwei Sensoranordnung zeitlich abgefragt werden, wobei eine der Sensoranordnungen, in Formulierung des Anspruchs die erste Sensoranordnung, aufgrund ihrer Anordnung und Ausrichtung am Kraftfahrzeug eine Zustandsänderung durch eine Betätigungsgeste als erste erfasst. Diese Sensoranordnung kann beispielsweise in Richtung des rückwärtigen Bereichs des Kraftfahrzeugs orientiert sein, während die zweite Sensoranordnung eher in dem Bereich unterhalb des Kraftfahrzeuges orientiert ist und dort Zustandsänderungen erfasst. Es ist zwangsläufig so, dass der Benutzer bzw. dessen die Geste ausführendes Körperteil, zuerst in den Erfassungsbereich der ersten Sensoranordnung gelangt, die entsprechend auch die weiteren Verfahrensschritte bedingt.

Wird die Betätigungsgeste korrekt ausgeführt, gelangt der Benutzer bzw. der bedienende Körperteil auch in den Erfassungsbereich des zweiten Sensors, und löst dort die charakteristische zweite Signalantwort zum Zeitpunkt t2 aus.

Ist die Geste in einer Richtung vollständig ausgeführt, bewegt der Benutzer sich in seiner Ausgangsstellung zurück, wobei der Bedienkörperteil, welcher zur Ausführung der Benutzungsgeste bewegt wurde, aus dem Erfassungsbereich der zweiten Sensoranordnung herausgelangt, was zu einer charakteristischen Signalantwort s3 zu einem Zeitpunkt t3 führt. Schließlich erfasst auch die erste Sensoranordnung die Rückkehr des Benutzers in seine Ausgangsstellung und gibt die Signalantwort s4 zum Zeitpunkt t4 aus. Wesentlich ist, dass die zeitlich Abfolge der Ereignisse in Abstimmung mit der räumlichen Anordnung der Sensoranordnung am Kraftfahrzeug mit getrennten Sensoreinrichtungen erfolgt.

In einem weiteren Verfahrensschritt werden die Erfassungszeiten der charakteristischen Signalantworten arithmetischen Operationen unterworfen, insbesondere werden Zeitdifferenzen aus Zeit-Wertepaaren gebildet. Auf diese Weise kann auf das Vorliegen einer Betätigungsgeste zurückgeschlossen werden. Dazu können die Verhältnisse der Zeitdifferenzen ermittelt werden (beispielweise Verhältnis der Zeitdifferenzen für eine Vorwärtsbewegung und eine Rückwärtsbewegung) und diese Verhältnisse einer Plausibilitätsprüfung unterzogen werden. Außerdem kann geprüft werden ob die zugehörigen Zeitdifferenzen der charakteristischen Signale innerhalb von Toleranzbereichen um solche Zeitdifferenzen liegen, die für eine gezielte Benutzungsgeste realistisch sind. Diese Zeitdifferenzen können als Vergleichsparameter gespeichert sein.

Im Gegensatz zu bekannten Verfahren wird bei diesem Verfahren also der höchst individuelle zeitliche Bestandteil der Sensorinformationen berücksichtigt, um die Erkennungsgenauigkeit zu erhöhen. Es wird nicht nur geprüft, ob die Signalfolge der Sensoren am Fahrzeug in der plausiblen Abfolge detektiert wird, sondern auch die genaue zeitliche Abfolge wird ausgewertet. Erfindungsgemäß werden mindestens vier verschiedene Zeitwerte ausgewertet - es können jedoch auch mehr Zeitwerte erfasst und berücksichtigt werden.

Da die Zeiten und Vergleichsparameter auf ein Individuum anpassbar sind, kann erfindungsgemäß der Tatsache Rechnung getragen werden, dass unterschiedliche Benutzer eine Betätigungsgeste unterschiedlich ausführen werden. Ältere Menschen werden beispielsweise ein anderes Bewegungsprofil aufweisen als jüngere Menschen. Bei den bestehenden Einrichtungen ist eine entsprechende Anpassung des Verfahrens jedoch regelmäßig nicht möglich. Erfindungsgemäß kann jedoch durch Änderung der Vergleichsparameter eine individuell angepasste Auswertung erzielt werden.

Als Sensoranordnung kommen grundsätzlich sämtliche Erfassungssensoren für zeitabhängige Lageveränderungen von Körpern im Raum in Frage. Beispielsweise können die etablierten kapazitiven Sensoren an Kraftfahrzeugen verwendet werden, diese weisen einen geringen Stromverbrauch auf und sind robust und belastbar.

Vorzugsweise wird bei dem Verfahren zur Erfassung von Bewegungsgesten die Folge der ermittelten Zeitdifferenzen mit im System des Kraftfahrzeugs abgespeicherten Vergleichsparametern verglichen. Zusätzliche Toleranzwerte, um welche Abweichungen um die Werte akzeptiert werden können ebenfalls im System des Kraftfahrzeuges abgespeichert sein. Diese systemseitige Abspeicherung von Vergleichsparametern erlaubt eine Anpassung der Erfassung und Detektion über die gesamte Lebensdauer des Kraftfahrzeuges. Wenn die systemseitig abgespeicherten Vergleichsparameter verändert werden, kann damit die Erfassungsgenauigkeit für ein geändertes Benutzerprofil optimiert werden. Außerdem können Vergleichsparametergruppen für unterschiedliche Benutzer abgespeichert werden, die dann benutzerabhängig abgerufen werden. Wird z.B. ein Benutzer durch einen persönlichen ID-Geber identifiziert, so kann der zu dem Benutzer gehörende Parametersatz zum Vergleich der erfassten Zeitdifferenzen herangezogen werden.

Außerdem können angepasste oder benutzerabhängige Toleranzwerte für den Vergleich der Zeitdifferenzen herangezogen werden. Auf diese Weise kann der Tatsache Rechnung getragen werden, dass z.B. ältere Benutzer eine höhere Schwankung der Zeitprofile bei der Ausführung einer Bewegungsgeste aufweisen und daher eine tolerantere Erfassung benötigen. Außerdem kann, je nach Benutzerwunsch, die Toleranz verringert werden, um tatsächlich eine weiter reduzierte Fehlerkennung zu erreichen.

In einer bevorzugten Ausführungsform der Erfindung wird das Verfahren zur Erfassung der Bewegungsgeste abgebrochen, falls seit Einleitung des Verfahrens eine vorgegebene Maximaldauer überschritten wird. Die Einleitung des Erfassungsverfahrens kann einerseits durch eine gezielte Betätigung des Benutzers eingeleitet werden oder durch eine Detektion einer Signalantwort in dem ersten Erfassungssensor. Dafür wird üblicherweise derjenige Sensor herangezogen, welcher den sich vom Fahrzeug am weitesten erstreckenden Erfassungsraum aufweist. Das Überschreiten der vorgegebenen Maximaldauer stellt sicher, dass nicht eine zufällige Folge von ungezielten Signalantworten eine Betätigung auslösen kann. Als vorgegebene Maximaldauer wird dafür üblicherweise für den Vollzug der Bewegungsgeste, gerechnet von der ersten Erfassung durch einen ersten Sensor ein Zeitfenster von einigen Sekunden, z.B. 3 bis 10 Sekunden vorgesehen. Eine Reduzierung der Maximaldauer verringert wiederum die Anzahl von Fehlerkennungen, erhöht jedoch andererseits die Anforderungen an den Benutzer.

In einer vorteilhaften Weiterbildung der Erfindung werden aus den zeitlichen Signalantworten der Sensoren weitere charakteristische Signale sx mit zugehörigen Erfassungszeitpunkten tx erfasst. Diese weiteren charakteristischen Signale können zwischen den vorstehend genannten Signalen s1, s2, s3 und s4 liegen, oder zeitlich vor oder nach diesen Signalen liegen. Als weitere charakteristische Signale kommen beispielsweise das Signal/Rauschverhältnis der Sensorantworten sowie Maximal- und Minimalwerte in Frage. Auch diese weiteren charakteristischen Signale können zusätzlich zu den Zeitdifferenzen ausgewertet werden, um die Erkennungsgenauigkeit der Bewegungsgeste weiter zu erhöhen. Wird beispielsweise ein bestimmtes Signal/Rauschverhältnis unterschritten, so kann dies auf eine starke Beeinträchtigung der Sensoren z.B. durch äußere Einflüsse zurückgeführt werden, und eine positive Bestätigungsantworterzeugung wird unterbunden. Diese Berücksichtigung von weiteren Signalantworten erhöht die Sicherheit und Zuverlässigkeit des Erkennungsverfahrens weiter.

Es ist außerdem vorteilhaft, wenn neben den Zeitdifferenzen auch wenigstens eines der Signale s1, s2, s3, s4 selbst ausgewertet wird und die Betätigung auch in Abhängigkeit von dieser Auswertung erkannt wird. Die charakteristischen Signale, zu welchen die erfindungsgemäß genannten Zeitpunkte erfasst werden, sind Signalmuster, insbesondere Signalveränderungen, die auf eine signifikante Veränderung im Detektionsbereich der jeweiligen Sensoranordnung zurückschließen lassen. Im Falle von kapazitiven Sensoren wird beispielsweise eine starke Kapazitätsänderung erfasst, sobald sich ein Körperteil eines Benutzers in dem Erfassungsbereich bewegt, nähert oder allgemein dort seine Lage bezüglich der Sensoranordnung verändert.

Erfindungsgemäß kann es zwar ausreichen, nur die Zeitdifferenzen zwischen der Erfassung dieser Signale für die Generierung des Betätigungssignals heranzuziehen, eine zusätzliche Auswertung wenigstens eines dieser Signale erhöht jedoch die Erkennungsgenauigkeit. Dazu kann ein einzelnes Signal in seinen absoluten Werten, z.B. ein Signalanstieg oder Signalabfall eines der Signale berücksichtigt werden, es können jedoch auch Verknüpfungen zwischen den charakteristischen Signalen gebildet werden, beispielsweise durch eine Verhältnisbildung der Signalstärken der unterschiedlichen Sensorantworten. Diese Werte können neben den Zeitdifferenzen einer Auswertung zugeführt werden.

In einer weiteren bevorzugten Ausführung der Erfindung wird ein von einem Benutzer mitführbarer ID-Geber abgefragt, um eine Autorisierung für den Zugriff auf die angeforderte Funktion zu verifizieren, wobei die Abfrage des ID-Gebers nach dem Zeitpunkt t1 und vorzugsweise vor dem Zeitpunkt t4 erfolgt.

Die Kopplung des Verfahrens mit einer Abfrage des ID-Gebers stellt sicher, dass nur autorisierte Personen Zugriff auf die betätigte Funktion erhalten. Erfolgt die Abfrage nach dem Zeitpunkt t1, so kann die Sensorantwort der ersten Sensoranordnung zum Wecken des Systems zur ID-Geber-Abfrage verwendet werden. Diese Abfrage findet üblicherweise über eine drahtlose Kommunikation mit dem Steuersystem des Kraftfahrzeugs statt. Die Abfrage vor dem Zeitpunkt t4 stellt sicher, dass es zu keiner spürbaren Verzögerung kommt, da die Abfrage des ID-Gebers nicht erst nach Prüfung der Bediengeste erfolgt.

Vorzugsweise wird in Abhängigkeit von der Verifizierung des ID-Gebers ein dem ID-Geber zugeordnetes Benutzerprofil mit abgespeicherten Vergleichsparametern zur Auswertung der Zeitdifferenzen herangezogen. Je nachdem, welcher Benutzer und zugehöriger ID-Geber erfasst wird, kann auf unterschiedliche Parametersätze zugegriffen werden, die fahrzeugseitig gespeichert sind. Dies reduziert die Fehlerkennungen und erhöht die Sicherheit der Detektion.

Erfindungsgemäß wird ein Verfahren zum Kalibrieren einer Sensoranordnung so ausgeführt, dass auf Anforderung des Benutzers die Sensoranordnung in einem Kalibriermodus versetzt wird. Der Benutzer kann dann Betätigungsgesten ausführen, um das System auf seine individuellen Bewegungsabläufe zu trainieren. Das Versetzen in den Kalibrierungszustand kann durch entsprechende Schaltanordnungen am Kraftfahrzeug oder durch einen Auslöser am vom Benutzer mitgeführten ID-Geber bzw. Fahrzeugschlüssel erfolgen. Kraftfahrzeugseitig werden dann wiederum die charakteristischen Signalantworten erfasst, die zugehörigen Zeiten jedoch nicht ausgewertet, sondern als zukünftige Vergleichsparameter herangezogen. Ein Benutzer bringt dementsprechend die Sensoranordnung in einem kalibrierungssensitiven Zustand, führt die Betätigungsgeste aus und quittiert danach, dass es sich um eine für ihn repräsentative Geste handelt. Die zugehörigen Signalzeiten t1, t2, t3, t4 werden verwendet, um Vergleichsparameter für zukünftige Auswertungen zu generieren. Dies kann auch über eine Mittelung über zahlreiche Trainingsvorgänge erfolgen. Je nachdem, wie stark die zeitlichen Werte beim Training durch ein und dieselbe Person abweichen, kann auch der Toleranzbereich für die zukünftigen Erfassungen erweitert oder verengt werden. Dies kann beispielsweise unter Berechnung einer Standardabweichung und der Streubreite erfolgen.

Wesentlich ist, dass die charakteristische zeitliche Abfolge der Signalwerte in zukünftigen Auswerteverfahren berücksichtigt ist, wodurch die Erkennungsgenauigkeit und Sicherheit deutlich erhöht wird. Die Sensoranordnung braucht nicht länger auf ein allgemeines tolerantes Erkennungsprofil ausgelegt werden, sondern kann demgegenüber deutlich selektiver, aber auch genauer auf den konkreten Benutzer angepasst werden.

Bei dem Verfahren zur Kalibrierung der Erfassungseinrichtung ist es vorteilhaft, wenn ein Benutzer das Kalibrierungsverfahren mehrfach durchführt und die in den vorhergehenden Durchläufen erzeugten Vergleichsparameter zusammen mit dem aktuellen Durchlauf ermittelten Vergleichsparametern zu neuen Vergleichsparametern kombiniert werden. Wird das Verfahren zur Kalibrierung mehrfach durchgeführt, kann sowohl eine gleitende Mittelwertbildung erfolgen, als auch eine Erfassung der Schwankungsbreite der jeweiligen Zeitdifferenzen um diese Mittelwerte. Das Verfahren ist in diesem Fall auch in seiner Toleranz anpassbar, da die Mittelwerte in Abhängigkeit von den tatsächlich ausgeführten Bewegungsabläufen mit unterschiedlichen Toleranzbereichen versehen werden, die systemseitig gespeichert werden.

Dabei kann so vorgegangen werden, dass bestehende Parameter durch den Benutzer zurückzusetzen sind, so dass er, z.B. als neuer Besitzer des Kraftfahrzeuges, eine gänzlich neuen Anlernvorgang bzw. eine Kalibrierung durchführen kann. Alternativ kann auch vorgesehen sein, dass für die Berechnung der neuen Parameter ein mit den Werten gleitendes Verfahren herangezogen wird, welches jeweils eine begrenzte zurückliegende Anzahl von Werten berücksichtigt, während die vor dieser Anzahl liegenden Werte aus der Auswertung herausfallen. Beispielsweise kann ein gleitender Mittelwert über eine gewisse Anzahl von Durchgängen, beispielsweise zehn Durchgänge gebildet werden, und auch diese Anzahl von Durchgängen wird bei der Ermittlung der Toleranzbereiche berücksichtigt. Hat also ein Benutzer zehn Anlerndurchläufe absolviert, so kann er sicher sein, dass vorhergehende Kalibrierungsabläufe in der Auswertung zukünftig keine Berücksichtigung mehr finden.

In einer bevorzugten Ausführungsform wird bei jedem Durchlauf des Kalibrierverfahrens ein zugehöriger Zähler erhöht, welcher für eine mitlaufende Mittelung, also einen gleitenden oder gewichteten Mittelwert der abzuspeichernden Vergleichsparameter herangezogen wird. Auf diese Weise kann auch über eine größere Anzahl von Lernvorgängen die Mittelung erfolgen, wobei die Erkennungsgenauigkeit immer weiter verfeinert wird. In diesem Fall ist jedoch darauf zu achten, dass möglichst eine Durchmischung verschiedener Benutzerprofile verhindert wird, um die Erkennungsgenauigkeit nicht unnötig zu reduzieren. Wie vorstehend bereits erläutert, kann zu diesem Zweck systemseitig eine Speicherung von zugehörigen Vergleichsparametern und Daten in mehreren Benutzerprofilen erfolgen.

Auch können weitere Vergleichsparameter neben den zeitlichen Differenzen abgespeichert werden, wie oben bereits bezüglich der charakteristischen Signalantworten erläutert. Werden beispielsweise beim Anlernvorgang zusätzlich zu den Differenzwerten auch beispielsweise die Verhältnisse der Signalantworten der verschiedenen Sensoren gespeichert und bei späteren Erkennungsvorgängen herangezogen, erhöht dies die Genauigkeit des Verfahrens. Auf diese Weise kann neben dem zeitlichen Profil, was höchst individuell für jeden Benutzer ist, auch Form und Masse des jeweiligen Bedienkörperteile in die Auswertung einfließen, da diese die absoluten Signalantworten beeinflussen. Diese Auswertung kann auch gewichtet erfolgen.

Die Erfindung wird nun anhand der beiliegenden Figuren näher erläutert.
Figur 1A zeigt in schematischer Weise die Anordnung einer Sensoranordnung zur Durchführung des erfindungsgemäßen Verfahrens;
Figur 1B zeigt die schematische Anordnung aus Figur 1A in einer anderen Ansicht;
Figur 2A zeigt den Ablauf eines Anlernvorgangs in Gestalt eines Programmablaufplans;
Figur 2B und Figur 2C erläutern die in Figur 2A gezeigten Unterroutinen;
Figur 3 zeigt schematisch die Ermittlung der Zeiten und Zeitdifferenzen gemäß der Erfindung;

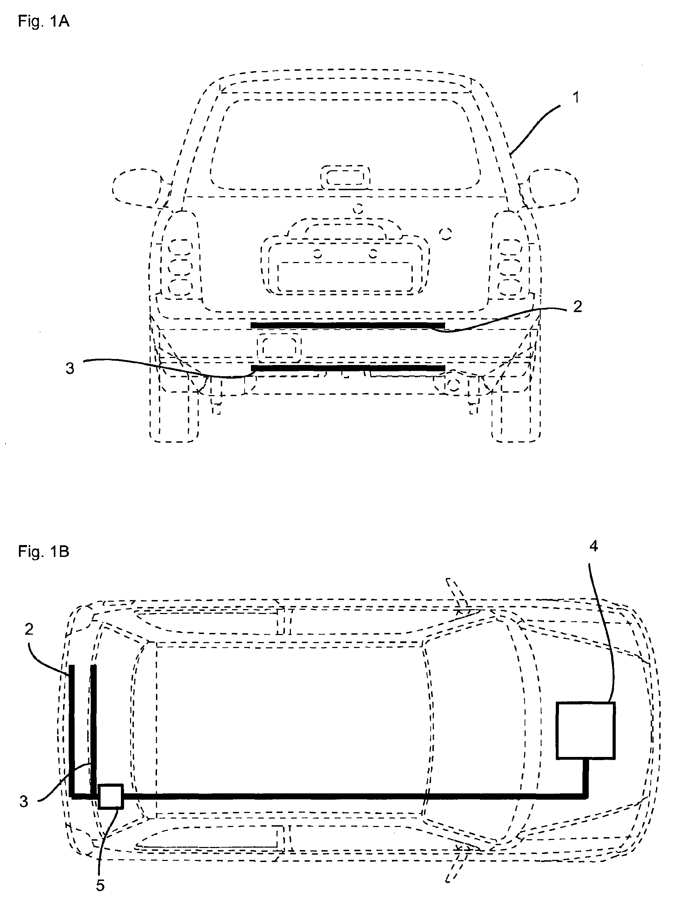

In Figur 1A ist das Heck eines Fahrzeugs 1 gezeigt. Im Bereich des Heckstossfängers ist eine Sensorelektrode 2 angebracht. Unterhalb der Sensorelektrode 2 ist eine weitere Sensorelektrode 3 angeordnet. Die Sensorelektroden 2 und 3 sind jeweils mit der Steuer- und Auswerteeinrichtung 5 verbunden. Eine Fahrzeugsteuereinheit 4 ist an beliebigem anderem Ort im Fahrzeug angeordnet (siehe Figur 1B).

Die Elektroden werden über die zugehörige Steuer-/Auswerteeinrichtung 5 aufgeladen und die Kapazitätsänderung der Elektroden bei Annäherung eines Körpers, z.B. eines Bedienerkörperteils, kann durch Ladungsauswertung erfasst werden. Dieses Prinzip eines kapazitiven Sensors ist im Bereich der Kraftfahrzeugtechnik bekannt.

Die Sensorelektrodenanordnung 3 verläuft in diesem Beispiel im Wesentlichen parallel zu der Elektrode 2.

Bei einem Bedienwunsch kann ein hinter dem Fahrzeug stehender Bediener bspw. seinen Unterschenkel in einer Schwenkbewegung unter den Stoßfänger bewegen. Diese Bewegung und Annäherung wird sowohl durch die Elektrodenanordnung 2 erfasst, als auch durch die Sensorelektrode 3, da die Kapazitätsänderung wiederholt abgefragt und die Veränderung der Kapazität ausgewertet wird. Diesbezüglich wird auch auf die bereits eingangs genannte Druckschrift DE102008063366 verwiesen.

Ein tatsächliches Öffnungskommando wird nur von der zentralen Steuereinrichtung 4 generiert. Dieser Steuereinrichtung 4 liefert die Steuer-/Auswerteeinrichtung 5 ein entsprechendes Bediensignal, das unter Verwendung eines neuronalen Netzes erzeugt wird. Ob tatsächliche eine Öffnung ausgelöst wird, bestimmt die Steuereinrichtung 4 in Abhängigkeit von diesem Signal und weiteren Parametern (Stillstand des Fahrzeugs etc.).

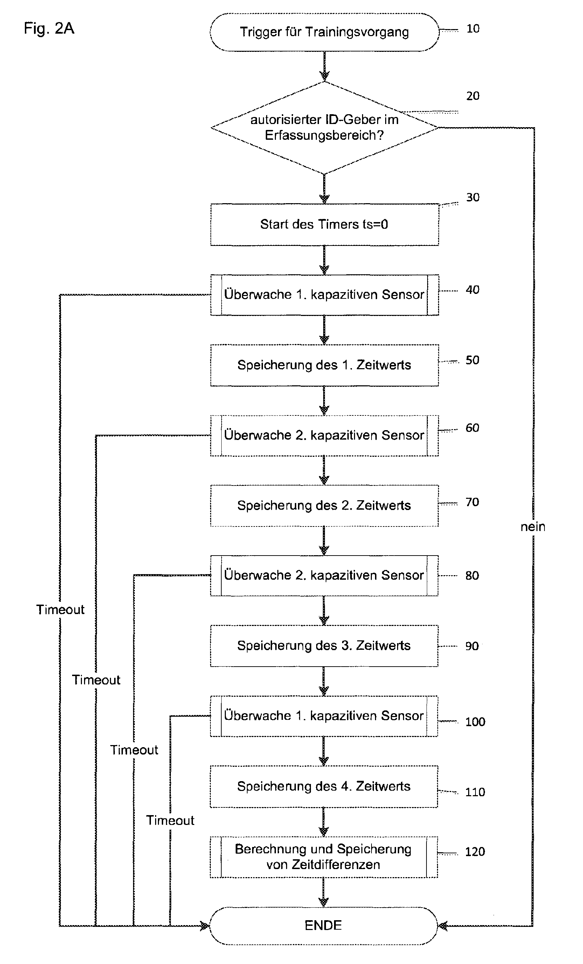

Figur 2A zeigt den Ablauf eines Trainingsvorgangs für das erfindungsgemäße Verfahren. Zunächst wird bei Schritt 10 der Trainingsvorgang getriggert, dies kann beispielsweise durch Betätigung einer zugehörigen Taste am ID-Geber des Benutzers erfolgen. Der Benutzer drückt eine Taste oder Tastenkombination an seinem ID-Geber bzw. Kraftfahrzeugschlüssel, um dem Fahrzeug zu signalisieren, dass nun ein Trainingsvorgang für die Sensoranordnung starten soll.

In Schritt 20 wird fahrzeugseitig überprüft, ob sich ein autorisierter ID-Geber im Erfassungsbereich des Kraftfahrzeuges befindet, dabei kann auch eine Entfernungsermittlung und diesbezügliche Plausibilitätskontrolle erfolgen. Nur ein Benutzer, der sich in einem vorgegebenen Umkreis um das Fahrzeug aufhält, soll den Trainingsvorgang starten dürfen.

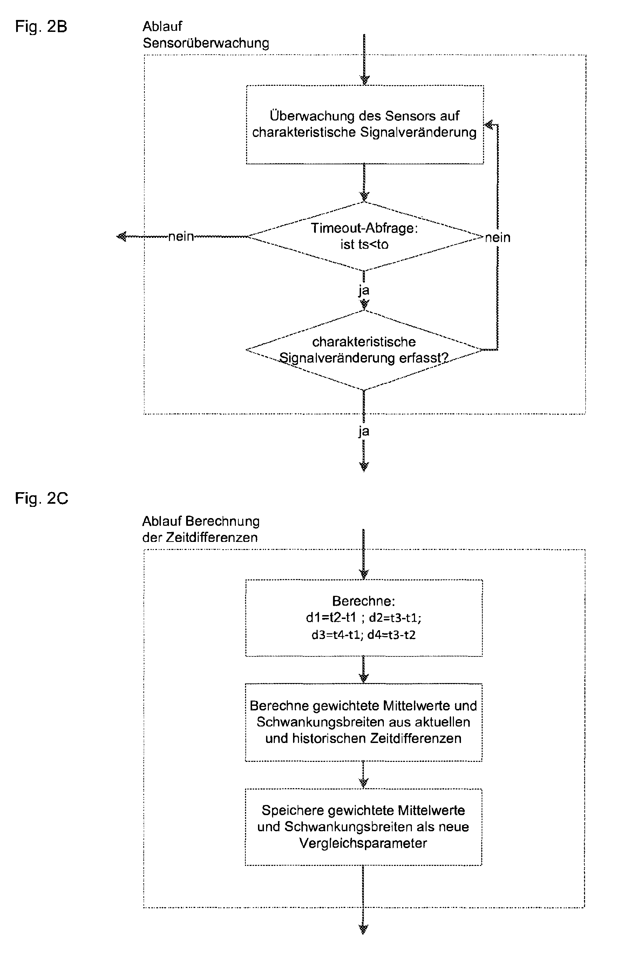

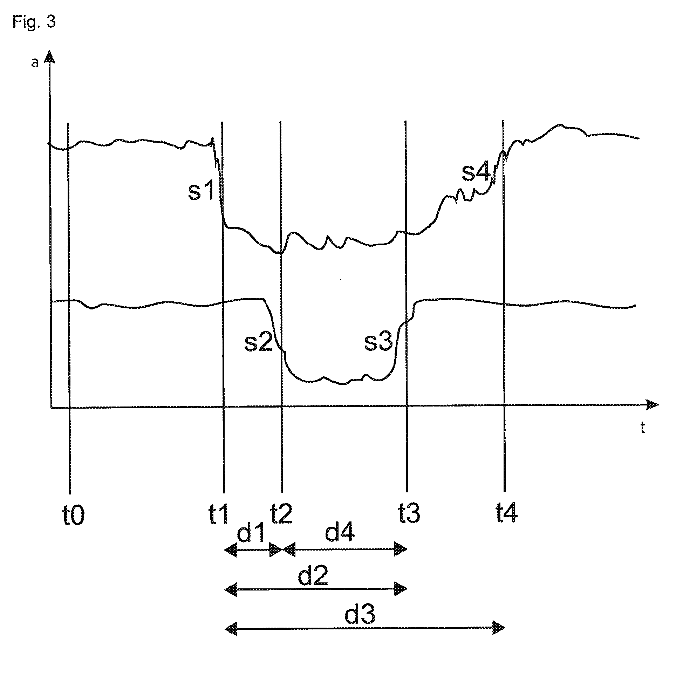

Verläuft die Autorisierungsprüfung in Schritt 20 positiv, wird in Schritt 30 ein Zeitgeber zurückgesetzt und gestartet. In Schritt 40 wird die Unterroutine zur Überwachung des ersten kapazitiven Sensors eingeleitet. Eine Erläuterung der Überwachungsunterroutinen ist in Figur 2B dargestellt. Der zeitliche Signalverlauf des ersten kapazitiven Sensors wird überwacht und eine charakteristische Signalveränderung ermittelt. Diese charakteristische Signalveränderung ist beim kapazitiven Sensor durch eine signifikante Veränderung des Sensorwertes, z.B. durch einen starken Anstieg oder Abfall gegeben (siehe Erläuterungen zu Figur 3). Dabei werden kurzzeitige Signalspitzen ignoriert. Während der Überwachung wird wiederholt geprüft, ob der zuvor gestartete Timer TS mittlerweile eine Timeout-Grenze t0 überschritten hat. Ist dies der Fall, wird das Verfahren abgebrochen. Ansonsten wird die Überwachung des Sensors weitergeführt, bis eine charakteristische Signalveränderung erfasst wurde. Zur Erfassung der charakteristischen Signalantwort können die bereits bisher bei kapazitiven Sensoren angewandten Erfassungsverfahren eingesetzt werden.

Sobald die charakteristische Signalveränderung des ersten kapazitiven Sensors erfasst wurde, wird bei Schritt 50 der zugehörige erste Zeitwert t1 gespeichert. Bei den Schritten 60 und 70 wird das Verfahren in analoger Weise für den zweiten kapazitiven Sensor durchgeführt.

Wie in Figur 1a und 1b ersichtlich, weisen die kapazitiven Sensoren 2, 3 verschiedene Anordnungen und unterschiedliche Erfassungsbereiche auf. Ein ordnungsgemäß durchgeführter Trainingsvorgang wird zwangsläufig zunächst zu einem charakteristischen Signal im ersten kapazitiven Sensor 2 und dann im zweiten kapazitiven Sensor 3 führen. Dies ergibt sich aufgrund der Tatsache, dass die Bewegung in der vorgesehenen Weise durch einen Benutzer zunächst durch den Erfassungsbereich des ersten kapazitiven Sensors 2, und dann des zweiten kapazitiven Sensors 3 führt. Die Bewegung bei eines von hinten unter das Fahrzeug ausgeführten Bewegung wird immer erst von dem ersten und dann von dem zweiten Sensor erfasst.

Diese Abfolge ist auch in dem erfindungsgemäße Erfassungsverfahren und Trainingsverfahren wiedergegeben und enthält damit implizit eine Plausibilitätsüberprüfung der richtigen Abfolge des Bewegungsablaufs.

Zu der charakteristischen Signalveränderung des zweiten kapazitiven Sensors wird in Schritt 70 wiederum ein zweiter Zeitwert t2 gespeichert, wobei während der Überwachung wiederholt die Überschreitung einer maximal zulässigen Zeitvorgabe geprüft wird und das Verfahren ggf. abgebrochen wird.

In den Schritten 80 und 90 erfolgt wiederum die Überwachung des zweiten kapazitiven Sensors 3, diesmal jedoch in Erwartung einer anderen charakteristischen Signalveränderung, nämlich einer solchen, die auf ein Herausbewegen eines Bedienkörperteils aus dem Erfassungsbereich des zweiten kapazitiven Sensors hinweist. Die Überwachung des ersten und zweiten kapazitiven Sensors in den Schritten 40 und 50 bzw. 60 und 70 zielt auf die Detektion eines sich in den Erfassungsbereich bewegenden Körperteils. Die Detektion in den Schritten 80 und 90 sowie 100 und 110 geschieht in Erwartung eines Herausbewegens des Bedienkörperteils aus dem Erfassungsbereich. Daher werden die charakteristischen Signalveränderungen auch dementsprechend ausgewertet und unpassende Signalantworten verworfen. Auch darin liegt wiederum eine implizite Plausibilitätskontrolle, da wiederholt auch der zeitliche Ablauf durch Überwachung des Überschreitens der Time Out-Bedingung geprüft wird. Es ist an dieser Stelle klar, dass unter charakteristischer Signalantwort für jeden Sensor eine gänzlich andere Signalantwort verstanden werden kann.

Ist bis zur Speicherung des vierten Zeitwertes im Schritt 110 zu der charakteristischen Signalantwort des ersten kapazitiven Sensors in Schritt 100 noch kein Timeout aufgetreten, werden in Schritt 120 die Berechnung der Zeitdifferenzen und die Speicherung der Zeitdifferenzen vorgenommen. Das zugehörige Verfahren ist beispielhaft in Figur 2C dargestellt. Verschiedene Zeitdifferenzen, welche charakteristisch für den Bewegungsablauf sind, werden ermittelt. Die aus dem aktuellen Durchlauf ermittelten Zeitdifferenzen werden mit den bereits im System vorhandenen Zeitdifferenzen gewichtet, um Mittelwerte zu bilden und Schwankungsbreiten aus dem aktuellen Trainingsvorgang und historischen Zeitdifferenzen aus vorhergehenden Trainingsvorgängen zusammenzufassen. Anschließend werden die neuen gewichteten Mittelwerte und Schwankungsbreiten als Vergleichsparameter für zukünftige Auswertungsverfahren gespeichert.

Figur 3 zeigt beispielhaft anhand zweier Signalverläufe der beiden Sensoranordnungen 2, 3 den zeitlichen Verlauf und die Ermittlung der zugehörigen Zeiten und Zeitdifferenzen. Die beiden Sensoranordnungen sind weiterhin kapazitive Sensoranordnungen (siehe Fig. 1A, 1B), die auf das Hereinbewegen oder Herausbewegen eines Bedienerkörperteils in dem Erfassungsbereich oder aus dem Erfassungsbereich mit Signalveränderungen reagieren. Diese Signalveränderungen sind durch die Signalveränderungen s1, s2, s3 und s4 dargestellt. Zu den entsprechenden Signalveränderungen korrespondieren die Zeitpunkte t1, t2, t3 und t4. Der Zeitpunkt t0 gibt den Startpunkt des Erfassungsverfahrens bzw. Trainingsverfahrens wieder. Die dargestellten Zeitpfeile d1, d2, d3 und d4 geben ausgewählte Zeitdifferenzen zwischen den Erfassungszeitpunkten wieder.

In diesem dargestellten Beispiel ist es ersichtlich, dass der obere Signalverlauf zu der ersten Sensoranordnung 2 gehört, und zum Zeitpunkt s1 das Bein des Benutzers in Richtung des Fahrzeuges bewegt wird, wodurch eine Signalveränderung, hier ein Signalabfall, im Sensor 2 verursacht wird. Das Bedienkörperteil, also insbesondere der Unterschenkel und Fuß des Benutzers bewegt sich durch den Erfassungsbereich des ersten Sensors 2 und erreicht bei Signalantwort s2 zum Zeitpunkt t2 den Erfassungsbereich des zweiten Sensors 3. Nach einem Stoppen der Bewegung und beim Zurückbewegen des Fußes gelangt dieser bei Zeitpunkt t3 und Signal s3 wieder aus dem Erfassungsbereich der zweiten Sensoranordnung 3 und zum Zeitpunkt t4 auch wieder aus dem Erfassungsbereich des ersten Sensors 2, was sich im Signal s4 äußert.

Als charakteristische Signale s1, s2, s3 oder s4 werden in diesem Beispiel signifikante Signalveränderungen ausgewertet, es können jedoch grundsätzlich auch Absolutwertvergleiche oder sonstige Erfassungskriterien herangezogen werden.

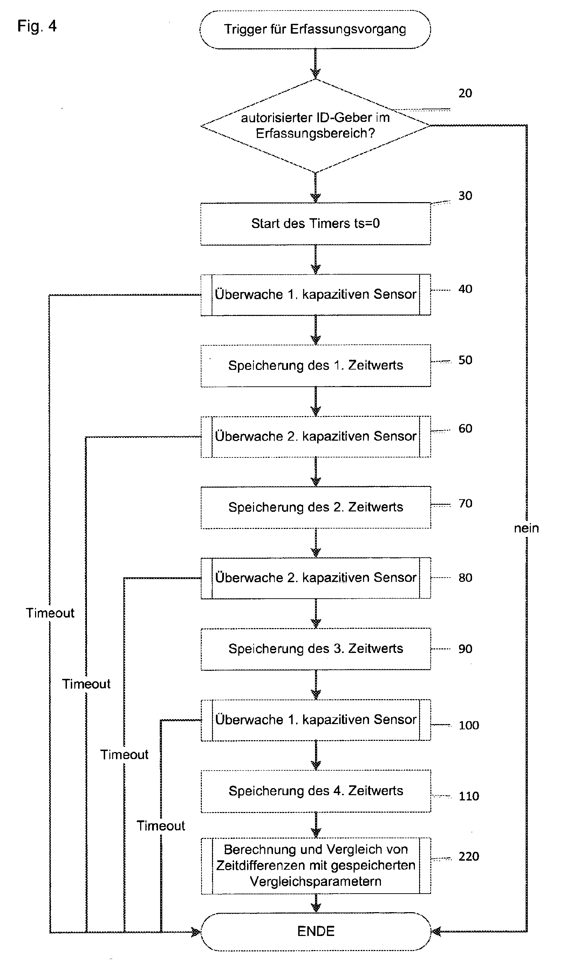

Die Auswertung eines Betätigungsvorgangs bei alltäglicher Betätigung verläuft in weiten Teilen ähnlich zu dem in den Figuren 2A, 2B und 2C gezeigten Kalibrierverfahren. Dieses Auswerteverfahren wird in Figur 4 dargestellt. Die Unterroutine zur Überwachung der Sensoren wurde oben in Bezug auf Figur 2B erläutert.

Der wesentliche Unterschied zu dem Kalibrierungsverfahren besteht darin, dass statt der Speicherung von Zeitdifferenzen nunmehr ein Vergleich von Zeitdifferenzen und sonstigen Parametern in Schritt 220 durchgeführt wird. Dabei greift das Kraftfahrzeug auf Werte zurück, die in den Trainingsvorgängen ermittelt und abgespeichert wurden.

Im Rahmen der Erfindung sind zahlreiche Abwandlungen möglich. Insbesondere sind verschiedene Arten von Sensoranordnungen für die Auswertung einsetzbar. Die Erfindung ist keineswegs auf den Einsatz von kapazitiven Sensoren beschränkt. Außerdem können kapazitive Sensoren mit anderen Sensoranordnungen kombiniert werden, wie beispielsweise der Einbeziehung der rückwärtigen Ultraschallsensoren für Parkvorgänge. Außerdem kann das Verfahren mit dem Einsatz anderer, ohnehin bereits vorhandener Sensoren kombiniert werden. Beispielsweise ist es möglich, eine Rückfahrkamera einzusetzen, um zu überprüfen, ob tatsächlich ein Benutzer im relevanten Bereich zugegen ist, wenn ein Trainingsvorgang eingeleitet wird. Nur wenn die Rückfahrkamera einen geeigneten Körper im Erfassungsbereich detektiert, kann das Trainingsverfahren ausgeführt werden. Außerdem ist die Erfindung keineswegs auf die Verwendung von zwei Sensoren beschränkt, vielmehr können auch weitere Sensoren eingesetzt werden, was die Detektionsgenauigkeit des Verfahrens weiter erhöht. Wesentlich ist, dass der zeitliche Ablauf der Bewegungsgeste und nicht die reine Signalveränderung durch die Bewegungsgeste in die Auswertung einfließt. Da der zeitliche Ablauf äußerst individuell für jeden Benutzer ist, wird damit die Erkennungsgenauigkeit einer entsprechenden Sensoranordnung erhöht.

## Patentansprüche

1. Verfahren zur Betätigungsabfrage für eine Funktion an einem Kraftfahrzeug (1) mit einer Sensoranordnung, wobei die Sensoranordnung wenigstens zwei beabstandete, kapazitive Sensoreinrichtungen (2, 3) zur Erfassung von Annäherungen eines Körperteils aufweist, wobei die Sensoreinrichtungen im Bereich des Heckstoßfängers eines Fahrzeugs angeordnet sind und die zweite Sensoreinrichtung unterhalb der ersten Sensoreinrichtung ist,
aufweisend die Schritte,
Überwachen der Signale der ersten Sensoreinrichtung von den Sensoreinrichtungen, bis eine charakteristische erste Signalantwort s1 von der ersten Sensoreinrichtung erfasst wird und Erfassen einer zugehörigen Zeit t1, danach
Überwachen der Signale der zweiten Sensoreinrichtung von den Sensoreinrichtungen, bis eine charakteristische zweite Signalantwort s2 von der zweiten Sensoreinrichtung erfasst wird und Erfassen einer zugehörigen Zeit t2, danach
Überwachen der Signale der zweiten Sensoreinrichtung, bis eine charakteristische dritte Signalantwort s3 von der zweiten Sensoreinrichtung erfasst wird und Erfassen einer zugehörigen Zeit t3, danach
Überwachen der Signale der ersten Sensoreinrichtung von den Sensoreinrichtungen, bis eine charakteristische vierte Signalantwort s4 von der ersten Sensoreinrichtung erfasst wird und Erfassen einer zugehörigen Zeit t4,
Ermitteln von wenigstens zwei Zeitdifferenzen, gebildet durch Subtraktion von jeweils zwei verschiedenen der Werte aus t1, t2, t3 und t4,
Auswerten der Zeitdifferenzen mit im System des Kraftfahrzeugs abgespeicherten Vergleichsparametern, wobei ein Betätigungssignal das einen Bedienwunsch anzeigt erzeugt wird, wenn die Zeitdifferenzen um weniger als vorgegebenen Toleranzwerte von den Vergleichsparametern abweichen und Erzeugen eines Betätigungssignals in Abhängigkeit von der Auswertung.

2. Verfahren nach Anspruch 1, wobei das Verfahren abgebrochen und ein negatives Betätigungssignal erzeugt wird, wenn das Verfahren länger als eine vorgegebene Maximaldauer andauert.

3. Verfahren nach einem der Ansprüche 1 bis 2, wobei weitere charakteristische Signale sx mit zugehörigen Erfassungszeitpunkten tx erfasst werden.

4. Verfahren nach einem der Ansprüche 1 bis 3, wobei zusätzlich zu den Zeitdifferenzen auch wenigstens eines der Signale s1, s2, s3, s4 ausgewertet wird, so dass das Betätigungssignal auch in Abhängigkeit von dieser Auswertung erzeugt wird.

5. Verfahren nach einem der Ansprüche 1 bis 4, wobei ein von einem Benutzer mitführbarer ID-Geber abgefragt wird, um eine Autorisierung für den Zugriff auf die angeforderte Funktion zu verifizieren, wobei die Abfrage des ID-Gebers nach dem Zeitpunkt t1, vorzugsweise vor dem Zeitpunkt t4 erfolgt.

6. Verfahren nach Anspruch 5, wobei in Abhängigkeit von der Verifizierung des ID-Gebers ein dem ID-Geber zugeordnetes Benutzerprofil mit abgespeicherten Vergleichsparametern zur Auswertung der Zeitdifferenzen herangezogen wird.

7. Verfahren nach Anspruch 1, wobei zum Kalibrieren einer der Sensoranordnung für eine Betätigungsabfrage,
die folgenden Schritte vorgesehen sind,
Überwachen der Signale der ersten Sensoreinrichtung von den Sensoreinrichtungen, bis eine charakteristische erste Signalantwort s1 von der ersten Sensoreinrichtung erfasst wird und Erfassen einer zugehörigen Zeit t1,
Überwachen der Signale der zweiten Sensoreinrichtung von den Sensoreinrichtungen, bis eine charakteristische zweite Signalantwort s2 von der zweiten Sensoreinrichtung erfasst wird und Erfassen einer zugehörigen Zeit t2,
Überwachen der Signale der zweiten Sensoreinrichtung, bis eine charakteristische dritte Signalantwort s3 von der zweiten Sensoreinrichtung erfasst wird und Erfassen einer zugehörigen Zeit t3,
Überwachen der Signale der ersten Sensoreinrichtung von den Sensoreinrichtungen, bis eine charakteristische vierte Signalantwort s4 von der ersten Sensoreinrichtung erfasst wird und Erfassen einer zugehörigen Zeit t4,
Ermitteln von wenigstens zwei Zeitdifferenzen, gebildet durch Subtraktion von jeweils zwei verschiedenen der Werte aus t1, t2, t3 und t4,
Abspeichern der Zeitdifferenzen als Vergleichsparameter für nachfolgende Auswertungen einer Betätigungsanforderung.

8. Verfahren nach Anspruch 7, wobei das Verfahren mehrfach durchführbar ist und wobei die in vorhergehenden Durchläufen erzeugten Vergleichsparameter zusammen mit den abgespeicherten Vergleichsparametern aus einem aktuellen Durchlauf zu einem neuen Vergleichsparameter kombiniert werden.

9. Verfahren nach Anspruch 8, wobei bei jedem Durchlauf des Kalibrierverfahrens ein Zähler erhöht wird, welcher für eine mitlaufende Mittelung des neu abzuspeichernden Vergleichsparameters mit den gemittelten Vergleichsparametern aus vorhergehenden Durchläufen verwendet wird.

10. Verfahren nach einem der Ansprüche 7 bis 9, wobei zusätzlich als weitere Vergleichsparameter Kennwerte wenigstens einer der charakteristischen Signalantworten s1, s2, s3 und s4 gespeichert werden.

## Claims

1. A method for actuation polling for a function on a motor vehicle (1) with a sensor arrangement, wherein the sensor arrangement comprises at least two spaced-apart capacitive sensor devices (2, 3) for detecting approaches of a body part, wherein the sensor devices are arranged in the area of the rear bumper of a vehicle and the second sensor device is below the first sensor device,
comprising the steps of
Monitoring the signals of the first sensor device of sensor devices, until a characteristic first signal response s1 from the first sensor device is detected and recording an associated time t1, then
Monitoring the signals of the second sensor device of sensor devices until a characteristic second signal response s2 from the second sensor device is detected and recording an associated time t2, then
Monitoring the signals of the second sensor device, until a characteristic third signal response s3 from the second sensor device is detected and recording an associated time t3, then
Monitoring the signals of the first sensor device of sensor devices, until a characteristic fourth signal response s4 from the first sensor device is detected and recording an associated time t4,
Determining at least two time differences, formed through subtraction from respectively two different values of the values from t1, t2, t3 and t4, Evaluating the time differences using comparison parameters stored in the motor vehicle system, wherein an actuation signal indicating an operating demand is generated, if the time differences deviate from the comparison parameters by less than the specified tolerance values, and generating an actuation signal in dependence of the evaluation.

2. The method according to claim 1, wherein the process is aborted and a negative actuation signal is generated, if the process lasts longer than a specified maximum duration.

3. The method according to one of claims 1 or 2, wherein further characteristic signals sx with associated recording times tx are detected.

4. The method according to one of claims 1 to 3, wherein in addition to the time differences at least one of the signals s1, s21, s3, s4 is also evaluated resulting in the actuation signal being also generated in dependence of this evaluation.

5. The method according to one of claims 1 to 4, wherein an ID transponder carried by a user is polled in order to verify an authorisation for accessing the requested function, wherein polling of the ID transponder takes place after the time t1, preferably before the time t4.

6. The method according to claim 5, wherein depending on the verification of the ID transponder, a user profile with stored comparison parameters and associated with the ID transponder is used for evaluating the time differences.

7. The method according to claim 1, wherein in order to calibrate a sensor arrangement for actuation polling, the following steps are provided:
Monitoring the signals of the first sensor device of sensor devices until a characteristic first signal response s1 from the first sensor device is detected and recording an associated time t1,
Monitoring the signals of the second sensor device of sensor devices until a characteristic second signal response s2 from the second sensor device is detected and recording an associated time t2,
Monitoring the signals of the second sensor device, until a characteristic third signal response s3 from the second sensor device is detected and recording an associated time t3,
Monitoring the signals of the first sensor device of sensor devices, until a characteristic fourth signal response s4 from the first sensor device is detected and recording an associated time t4,
Determining at least two time differences, formed by subtraction from respectively two different values of the values from t1, t2, t3 and t4,
Storing the time differences as comparison parameters for subsequent evaluations of an actuation request.

8. The method according to claim 7, wherein the method can be performed multiple times and wherein the comparison parameters generated in preceding runs are combined together with the stored comparison parameters from the current run to form a new comparison parameter.

9. The method according to claim 8, wherein for each run of the calibrating procedure, a counter is incremented which is used for a concurrent averaging of the new comparison parameter to be stored with the averaged comparison parameters of preceding runs.

10. The method according to one of claims 7 to 9, wherein characteristic values of at least one of the characteristic signal responses s1, s2, s3 and s4 are used additionally as further comparison parameters.

## Revendications

1. Procédé de requête d'actionnement pour une fonction sur un véhicule automobile (1) comportant un dispositif de capteur, dans lequel le dispositif de capteur présente au moins deux dispositifs de capteur (2, 3) capacitifs, espacés pour détecter les rapprochements d'une partie du corps, dans lequel les dispositifs de capteur sont disposés au niveau du pare-chocs arrière d'un véhicule et le deuxième dispositif de capteur est au-dessous du premier dispositif de capteur, présentant les étapes consistant à
surveiller les signaux du premier dispositif de capteur par les dispositifs de capter, jusqu'à ce qu'une première réponse de signal caractéristique s1 soit détectée par le premier dispositif de capteur et détecter un temps correspondant t1, puis
surveiller les signaux du deuxième dispositif de capteur par les dispositifs de capteur, jusqu'à ce qu'une deuxième réponse de signal caractéristique s2 soit détecter par le deuxième dispositif de capteur et détecter un temps correspondant t2, puis
surveiller les signaux du deuxième dispositif de capteur, jusqu'à ce qu'une troisième réponse de signal caractéristique s3 soit détecté par le deuxième dispositif de capteur et détecter un temps correspondant t3, puis
surveiller les signaux du premier dispositif de capteur par les dispositifs de capteur, jusqu'à ce qu'une quatrième réponse de signal caractéristique s4 soit détectée par le premier dispositif de capteur et détecter un temps correspondant t4,
déterminer au moins deux différences temporelles, formées en soustrayant respectivement deux valeurs différentes des valeurs de t1, t2, t3 et t4,
évaluer les différences temporelles avec les paramètres de comparaison mémorisés dans le système du véhicule automobile, dans lequel un signal d'actionnement qui affiche un souhait de manipulation est généré, quand les différences temporelles s'écartent des paramètres de comparaison de moins que les valeurs de tolérance prescrites et
générer un signal d'actionnement en fonction de l'évaluation.

2. Procédé selon la revendication 1, dans lequel le procédé est interrompu et un signal d'actionnement négatif est généré, quand le procédé dure plus longtemps d'une durée maximale prescrite.

3. Procédé selon une des revendications 1 à 2, dans lequel des signaux caractéristiques supplémentaires sx sont détectés avec des points temporels de détection tx correspondants.

4. Procédé selon une des revendications 1 à 3, dans lequel en plus des différences temporelles au moins un des signaux s1, s2, s3 est également évalué, de telle sorte que le signal d'actionnement soit également généré en fonction de cette évaluation.

5. Procédé selon une des revendications 1 à 4, dans lequel un émetteur d'ID portable par un utilisateur est interrogé, pour vérifier une autorisation d'accès à la fonction demandée, dans lequel l'interrogation de l'émetteur d'ID a lieu après le point temporel t1, de préférence avant le point temporel t4.

6. Procédé selon la revendication 5, dans lequel en fonction de la vérification de l'émetteur d'ID, un profil d'utilisateur coordonné à l'émetteur d'ID est extrait avec des paramètres de comparaison mémorisés pour évaluer les différences temporelles.

7. Procédé selon la revendication 1, dans lequel pour calibrer un des dispositifs de capteur en vue d'une requête d'actionnement, les étapes suivantes sont prévues consistant à,
surveiller les signaux du premier dispositif de capteur par les dispositifs de capteur, jusqu'à ce qu'une première réponse de signal caractéristique s1 soit détectée par le premier dispositif de capteur et détecter un temps correspondant t1,
surveiller les signaux du deuxième dispositif de capteur par les dispositifs de capteur, jusqu'à ce qu'une deuxième réponse de signal caractéristique s2 soit détectée par le deuxième dispositif de capteur et détecter un temps correspondant t2,
surveiller les signaux du deuxième dispositif de capteur, jusqu'à ce qu'une troisième réponse de signal caractéristique s3 soit détecter par le deuxième dispositif de capteur et détecter un temps correspondant t3,
surveiller les signaux du premier dispositif de capteur par les dispositifs de capteur, jusqu'à ce qu'une quatrième réponse de signal caractéristique s4 soit détecter par le premier dispositif de capteur et détecter un temps correspondant t4,
déterminer au moins deux différences temporelles, formées en soustrayant respectivement deux valeurs différentes des valeurs de t1, t2, t3 et t4,
mémoriser les différences temporelles comme des paramètres de comparaison pour des évaluations suivantes d'un dispositif d'actionnement.

8. Procédé selon la revendication 7, dans lequel le procédé peut être exécuté plusieurs fois et dans lequel les paramètres de comparaison générés aux passages précédentes sont combinés conjointement aux paramètres de comparaison mémorisés provenant d'un passage actuel en un nouveau paramètre de comparaison.

9. Procédé selon la revendication 8, dans lequel à chaque passage du procédé de calibrage un compteur est augmenté, qui est employé pour un calcul de moyenne subséquent du paramètre de comparaison à mémoriser avec les moyennes des paramètres de comparaison provenant des passages précédents.

10. Procédé selon une des revendications 7 à 9, dans lequel en outre comme paramètres de comparaison supplémentaires, des valeurs caractéristiques d'au moins une des réponses de signal caractéristiques s1, s2, s3 et s4 sont mémorisées.
